# EUROPÄISCHE PATENTSCHRIFT

(11) **EP 1 202 025 B1**
(45) Veröffentlichungstag und Bekanntmachung des Hinweises auf die Patenterteilung: **30.08.2006**
(21) Anmeldenummer: 01890296.5
(22) Anmeldetag: 22.10.2001
(51) Int. Cl.: G01D 5/347

(54) **Winkelmesseinrichtung**
Angle measuring device
Dispositif de mesure d'angles

(30) Priorität: 23.10.2000 AT 787002000
(43) Veröffentlichungstag der Anmeldung: 02.05.2002
(73) Patentinhaber: austriamicrosystems AG, 8141 Unterpremstätten (AT)
(72) Erfinder: Kempe, Volker, Prof., 8501 Lieboch (AT)
(74) Vertreter: Haffner, Thomas M.

(56) Entgegenhaltungen:
- DE-A- 2 157 801
- DE-A- 3 907 442
- DE-A- 4 022 837
- DE-A- 19 855 064
- DE-C- 3 907 447

## Beschreibung

Die Erfindung betrifft eine Meßeinrichtung zur berührungslosen Erfassung des absoluten Drehwinkels einer Welle, insbesondere einer Lenksäule, bei Mehrfachumdrehungen, bei welcher an der welle oder einem mit ihr verbundenen Teil magnetische, optische oder magneto-optische Strukturen angeordnet sind, wobei die Welle ein Gewinde trägt, welches mit einem in Achsrichtung der Welle verschiebbaren Reiter in Eingriff steht, und wenigstens ein Sensor zur Erfassung der magnetischen, optischen oder magneto-optischen Strukturen sowie der Verschiebelage des Reiters vorgesehen ist.

Eine derartige Messeinrichtung ist aus der DE 19855064 A1 bekannt geworden.

Zur berührungslosen Erfassung des Drehwinkels einer Welle sind bereits eine Reihe von Vorschlägen bekannt geworden. Die bekannten Ausbildungen umfassen beispielsweise Zählscheiben, deren Rotation der Änderung des zu messenden Drehwinkels entspricht. Am Umfang derartiger Zählscheiben sind Ausnehmungen bzw. Zähne angeordnet, welche von optischen Sensoren bzw. von induktiven Näherungsschaltern erfasst werden können. Die dadurch ausgelösten Zählimpulse müssen in der Folge elektronisch weiterverarbeitet werden. Derartige messeinrichtungen sind dazu geeignet inkrementelle winkelveränderungen zu erfassen und zu speichern. Um eine Information über den absoluten momentanen Drehwinkel zu erhalten, muss bei derartigen Messeinrichtungen zusätzlich auch die Drehrichtung erfasst werden, wobei durch Summation der inkrementellen Winkelveränderungen auch der absolute Drehwinkel errechnet werden kann. Prinzipiell sind die bekannten Messeinrichtungen auch zur Erfassung von Drehwinkeln bei Mehrfachumdrehungen der Welle geeignet, wobei es in diesem Fall ausreicht die Drehwinkel und die Drehrichtung absolut im Bereich zwischen 0 und 360° zu messen und auf die erfolgte Gesamtwinkeländerung zurüakzurechnen. Der Nachteil dieser Vorgehensweise besteht neben der Schwierigkeit den Übergang von einem Umdrehungsbereich zum anderen unter allen Bewegungsbedingungen eindeutig zu detektieren darin, dass das System die im Ausachaltmoment vorhandene Winkelposition speichern muss, um bei einer neuerlichen Inbetriebnahme diese auf den Referenzpunkt zurückrechnen zu können. Im Ruhezustand erfolgte Drehungen werden bei inkrementeller Winkelmessung allerdings überhaupt nicht erfasst.

Für die meisten Winkelmeßsystems mit Mehrfachumdrehung, wie z.B. für Längssäulendrehwinkelmeßsysteme, ist jedoch die absolute Messung der Winkelposition innerhalb des vorgegebenen Mehrfachumdrehungsbereiches zu jeder Zeit und nach jeder Einschaltung des Systems unumgänglich. Für die Absolutmessung von Drehwinkeln bei Mehrfachumdrehungen wurden deshalb beispielsweise Reduktionsgetriebe in Form von Planetengetrieben eingesetzt, bei denen der Bereich der Mehrfachumdrehung direkt oder stufenweise auf eine vollumdrehung oder auf rückrechenbare Teilumdrehungen abgebildet wird. Die Winkelpositionen der einzelnen Zahnräder kann dabei mittels optischer oder magnetischer Sensoren erfasst und entsprechend ausgewertet werden. Derartige Systeme mit präzisen mechanischen Untersetzungen sind allerdings teuer, empfindlich gegenüber mechanischen Belastungen und alterungsanfällig. Darüberhinaus beanspruchen sie einen erheblichen Einbauraum.

Aus der DE 19855064 A1 ist ein optoelektronischer Lenkwinkelsensor zum Bestimmen der absoluten winkelstellung des Lenkrades eines Kraftfahrzeugs bekannt geworden, bei welchem mit der Drehbewegung des Lenkrades eine Codescheibe gekoppelt ist, welche zwei voneinander verschiedene codespuren aufweist. Die eine Codespur ist eine eingängige Spirale, die sich über einen winkel von 360° erstreckt und die Erfassung eines ebensolchen Winkels ermöglicht. Die andere Codespur ist eine dreigängige Spirale, welche dementsprechend die Erfassung eines Winkels innerhalb von drei Umdrehungen ermöglicht.

Die vorliegende Erfindung zielt daher darauf ab, eine Messeinrichtung zur beruhrungsloaen Erfassung des absoluten Drehwinkels einer Welle, insbesondere einer Lenksäule eines Fahrzeuges, bei Mehrfachumdrehungen zu schaffen, welche keine teuren Präzisionsgetriebe oder mechanisch bewegten Präzisionsteile benötigt. Da die Messeinrichtung für viele Anwendungen, wie z.B. die Mehrfachumdrehungsmessung von Lenksäulen, nicht am Ende der Drehspindel angeordnet werden kann, soll die erfindungsgemäße Messeinrichtung sich kompakt um die Welle anordnen lassen und insbesondere geringe Einbaumaße aufweisen. Außerdem sollen ausschließlich robuste und kostengünstige Messverfahren zur Abstands- und Winkelmessung zum Einsatz kommen. Weiters liegt der Erfindung die Aufgabe zugrunde ein Winkelmeßsystem für Mehrfachumdrehungen zu schaffen, welches die absolute Messung der Winkelposition innerhalb des vorgegebenen Mehrfachumdrebungsbereiches ermöglicht, wobei das Meßsystem auch bei Ausschalten und neuerlicher Inbetriebnahme des Systemes sowie bei im Ruhezustand erfolgten Drehungen korrekte Heasergebnisae liefern soll.

Zur Lösung dieser Aufgabe ist die erfindungsgemäße Messeinrichtung im wesentlichendurch die Merkmale des Anspruchs 1 gekennzeichnet. Dadurch, dass an der Welle oder einem mit ihr verbundenen Teil, beispielsweise einer Scheibe oder einem Zylinderteller, magnetische,optische oder magneto-optische Strukturen angeordnet sind, wird eine genaue, eindeutige und absolute Messung des Drehwinkels innerhalb eines Bereiches einer einzigen Umdrehung, d.h. innerhalb eines Bereiches zwischen 0 und 360° ermöglicht. Dabei werden durch entsprechend vorgesehene Sensoren ein oder mehrere Ausschnitt der magnetischen, optischen oder magneto-optischen Strukturen an der Welle erfasst, wobei die Strukturen derart gestaltet sind, dass jeder Messlinie und damit jedem Drehwinkel ein nur für diesen Drehwinkel charakteristischer Ausschnitt der Struktur zugeordnet ist. Dadurch wird eine messeinrichtung geschaffen, bei der innerhalb eines Bereiches zwischen 0 und 360° eine absolute Winkelmessung unmittelbar erreicht wird und bei der daher kein Bedarf besteht die einzelnen Messwerte bzw. Zählimpulse zu summieren bzw. in elektronischen Schaltungen weiterzuverarbeiten, wie dies bei der inkrementellen Winkelerfasaung der Fall ist. Eine Speicherung des zuletzt erfassten Messwertes ist nicht erforderlich, da nach Abschaltung und Wiederinbetriebnahme des Systemes unmittelbar der momentane Drehwinkel aufgrund des vom Sensors erfassten charakteristischen Ausschnittes der magnetischen, optischen oder magneto-optischen Struktur ermittelt werden kann. Auf diese Art und Weise können auch im Ruhezustand erfolgte Drehwinkeländerungen die Messung nicht verfälschen.

Um nun auch die Messung der Anzahl der Umdrehungen bzw. in Kombination mit der oben beschriebenen absoluten winkelmessung auch Drehwinkel im Bereich von größer als 360° bzw. kleiner als 0° zu erreichen, ist die erfindungsgemäße Messeinrichtung derart ausgebildet, dass die Welle ein Gewinde trägt, welches mit einem in Achsrichtung der Welle verschiebbaren Reiter in Eingriff steht. Durch die axiale Verschiebung des Reiters in Abhängigkeit vom Gesamtumdrehungswinkel erfolgt eine grobe Messung des Gesamtumdrehungswinkels, wobei die axiale Verschiebung des Reiters vom Sensor erfasst wird. In bevorzugter Weise ist der Reiter als eine die Welle umgebende Hülse ausgebildet, welche mit einem mit dem Gewinde der welle in Eingriff stehenden Innengewinde versehen ist. Insgesamt ergibt sich somit aufgrund der Kombination einer genauen absoluten Winkelmessung in einem Bereich zwischen 0 und 360°, d.h. innerhalb des Bereiches einer einzigen Umdrehung, mit einer aufgrund der axialen Verschiebung des Reiters bzw. der Hülse erfolgenden Winkelmessung über den gesamten, mehrere Umdrehungen umfassenden Winkelmessbereich, eine Messanordnung, bei welcher eine genaue Absolutwinkelmessung auch bei Mehrfachumdrehungen ermöglicht wird, wobei auch nach Abschalten und Wiederinbetriebnahme des Systemes ohne Abspeicherung des zuletzt gemessenen winkelwerten ein richtiger Messwert zur Verfügung steht. Dabei erfolgt die Winkelmessung aufgrund der achaenparallelen Verschiebung des Reiters bzw. der Hülse nur sehr grob und es können somit einfache und billige Gewinde oder mechanische Umsetzungen, z.B. als Plastspritzguß, verwendet werden. Dabei genügt eine grobe Messung etwa mit der Genauigkeit einer halben Umdrehung, da diese Grobmessung ja nur zur Ermittlung der Anzahl der Umdrehungen herangezogen wird, wobei die genaue Absolutwinkelmessung, wie bereits beschrieben, aufgrund der auf der Welle angeordneten magnetischen, optischen oder magneto-optischen Struktur erfolgt. Die Grobmessung kann auch zur Unterstützung der Absolutwinkelmessung herangezogen werden, um z.B. mögliche Mehrdeutigkeiten bei segmentieller Strukturierung der Absolutwinkelmessung zu eliminieren, wobei dann eine etwas höhere Genauigkeit für die Bestimmung der Anzahl der Teilumdrehung die einem Segment der Absolutwinkelmessung entspricht nötig ist.

Die Erfassung der magnetischen, optischen oder magneto-optischen Strukturen erfolgt gemäß einer bevorzugten weiterbildung der Erfindung entlang einer sich in axialer oder annährend axialer Richtung der welle erstreckenden Messlinie, wobei weiters der Sensor als zur Messlinie parallel angeordnetes Sensorarray ausgebildet sein kann. Die zu erfassenden Strukturen können dabei beispielsweise als Magnetfeldstrukturen aus weich- oder hartmagnetischem Material ausgebildet sein. Sie können aus abrupten Feld- bzw. Magnetisierungsübergängen oder aus glatteren Übergängen, wie sie z.B. bei dichter Wechselmagnetisierung entstehen, gebildet werden. Im Falle einer aus weichmagnetischem Material gebildeten Magnetstruktur wird hinter oder neben dem Sensorsystem ein Erregermagnet angebracht. Eine besonders einfache Ausführung ergibt sich, wenn die Struktur so gestaltet ist, dass sie die Winkelposition direkt in ein Abstandsmaß transformiert. Zu diesem Zweck ist die Messeinrichtung bevorzugt so ausgebildet, dass die magnetischen, optischen oder magneto-optischen Strukturen von schraubenlinienförmig bzw. spiralförmig angeordneten Übergangslinien zwischen Bereichen unterschiedlicher magnetischer, optischer oder magneto-optischer Eigenschaften gebildet sind. Zu diesem Zweck können beispielsweise Magnetstrukturen aufgebracht werden, die mindestens eine einfach detektierbare Feld- oder Magnetisierungsveränderung aufweisen, und zwar beispielsweise eine, die bei einer Umdrehung der Welle einen entlang der Mantellinie der Welle monoton wachsenden Abstand zu einer Referenzlinie besitzt und somit eine eindeutige Zuordnung eines Winkelwertes zu einem Abstandswert ermöglicht. Ein wesentlicher vorteil ergibt sich dabei nämlich dadurch, dass an der Welle oder an dem mit ihr verbundenen Teil eine vom Sensor erfassbare Referenzlinie oder -bereich zur Bestimmung einer Bezugsposition angeordnet ist, wobei in bevorzugter Weise die Referenzlinie bzw. -bereich als ein in einer normalen Ebene auf die Wellenachse liegende Bezugsring ausgebildet ist. Dadurch kann eine axiale Bewegung des Sensorsystemes relativ zur Welle solange die Messgenauigkeit nicht beeinflussen, solange das Sensorarray die gesamte Magnetstruktur überdeckt, da ja nicht die absolute Position der charakteristischen Magnetstruktur sondern nur der relative Abstand zwischen der Struktur und einem Referenzpunkt ermittelt wird.

Die Erfassung der markanten magnetischen, optischen oder magneto-optischen Strukturen erfolgt erfindungsgemäß mit Hilfe eines Sensorarrays bestehend z.B. aus n Hallelementen die vorzugsweise linear angeordnet sind, wobei eine oder mehrere Reihen von Sensoren verwendet werden können. Bei Verwendung von Magnetosensoren werden vorzugsweise Halleenaoren herangezogen, welche die zur Sensoroberfläche senkrechte Magnetfeldkomponente messen. Das Sensorarray kann parallel zu einer Erzeugenden des Wellenmantels oder entlang einer beliebigen anderen zweckmäßig angeordneten Mesolinie ausgerichtet werden. Aus Kostengründen und Gründen der monolithischen Integrierbarkeit der Sensoren auf einem oder zumindest wenigen integrierten Schaltkreisen muss die Länge des Sensorarrays so klein wie möglich gehalten werden. Andererseits muss die Länge zumindest die zur Bestimmung des Winkels notwendige Höhe der magnetischen, optischen oder magneto-optischen Struktur überdecken. Damit ergibt sich z.B. im Falle einer schraubenlinienförmigen Magnetfeldänderung und eines Bezugsringes, dass die Länge größer als die Summe aus der Ganghöhe der Schraubenlinie, der axialen Ausdehnung des Strukturanteiles des Bezugsringbereichea und einem Sicherheitsabstand ist, der die weitgehend störungsfreie Anbringung der Schraubenlinienstruktur und der Bezugsringstruktur ermöglicht. Für praktisch anzustrebende Arraylängen, z.B. unter 10 mm, und einer Ganghöhe für die Schraubenlinie von 5 mm ergibt sich somit eine Anforderung an die Genauigkeit der Abstandsmessung von Δh < Δα x 5 mm/360°, was z.B. bei einer geforderten Winkelgenauigkeit von 1° eine Abstandsmeeagenauigkeit von besser als 14 *µ*m erfordern würde.

Im Falle von einfach realisierbaren Magnetstrukturen und den damit verbundenen Feldgrößen in der Größenordnung von Dutzenden bis Hunderten von Gauss sowie mit einfach realisierbaren und kostengünstigen Sensoren, deren geometrische Ausdehnung selbst in der Größenordnung von mehreren 10 bis 100 *µ*m liegt, sind derartige Genauigkeiten allerdings unter Umständen schwer erreichbar. Deshalb wird in bevorzugter Weise so vorgegangen, dass die Winkelmessung innerhalb eines Umdrehungsbereiches durch Messung des Winkels in Teil; segmenten des Umdrehungsbereiches sowie durch die davon unabhängige Bestimmung des zugehörigen Teilsegmentes folgt. Zu diesem Zweck ist die Ausbildung in bevorzugter Weise so getroffen, dass an der Welle oder dem mit ihr verbundenen Teil gesonderte magnetische, optische oder magneto-optische Strukturen angeordnet sind, welche von sich in Umfangsrichtung wiederholenden Strukturmustern gebildet sind. Wenn nun für jedes der sich wiederholenden Strukturmuster eine die Winkelinformation in eine Abstandsinformation umwandelnde Struktur verwendet wird und für die Messung die gleiche Teilsegmenthöhe zur Verfügung steht, so verringert sich nun die Anforderung an die Genauigkeit der Abstandsmessung etwa um den Faktor m, wobei m die Anzahl der über den Umfang verteilten Segmente darstellt. Für die Grobwinkelmessung, welche der Bestimmung des betreffenden Teilsegmentes dient, müssen nur mehr etwa 2 x m winkelpositionen aufgelöst werden. Die Struktur zur Grobwinkelmessung erfordert ebenfalls eine bestimmte axiale Höhe, die aber wegen der geringen Genauigkeitsanforderung klein gehalten werden kann.

Die Zuordnung der Ergebnisse der genauen Winkelmessungen zu den jeweiligen Teilsegmenten sowie die Berechnung des Umdrehungswinkele in den gegebenenfalls vorhandenen Überlappungsbereichen der Teilsegmente erfolgt durch einfache logische und arithmetische Verknüpfungen. Die teilweise Überlappung der Segmente kann notwendig sein, da am Ende magnetischer Übergangsstrukturen Verzerrungen auftreten, die die Messgenauigkeit einschränken. Durch die Überlappung wird gewährleistet, dass im Fall lokaler Messungen, z.B. der Nulldurchgänge des Feldes, immer mindestens ein einwandfreier Messwert zur Verfügung steht. Bei integraler Messung einer bekannten, z.B. periodischen Struktur kann auf die Überlappung verzichtet werden, da sich die Phasenlage einer derartigen Struktur eindeutig durch Messung über eine volle Segmentperiode oder sogar nur über Teile davon bestimmen läßt.

Wie bereits erwähnt, erfolgt die Erfassung der Anzahl der Umdrehungen oder gegebenenfalls des jeweiligen Sektors mit Hilfe eines in axialer Richtung verschiebbaren Reiters. Die Ausbildung ist hierbei erfindungsgemäß derart ausgebildet, dass der Reiter unmittelbar mit dem Sensor verbunden ist, sodass eine vom Drehwinkel abhängige axiale Verschiebung des gesamten Sensors erfolgt. Die umdrehungsabhängige Verschiebung des Sensors wird dabei durch Bestimmung der Lage eines Referenzringes relativ zu einem beliebigen am Sensor definierten Nullpunkt erfasst und über die Gewindesteigung in die entsprechende winkelposition rückgerechnet. Die genaue Absolutmessung innerhalb einer Umdrehung erfolgt über die Abstandsmessung zur Referenzatruktur, wobei im Unterschied zum feststehenden Sensor hier die Messung durch die Bewegung des Sensors gestört werden kann. Im Vergleich zum festehenden Sensor ist diese Variante außerdem empfindlich gegenüber den durch die Bewegung hervorgerufenen Änderungen der Montagetoleranzen oder verkippungen und erfordert deshalb genaue und damit teure Führungen bzw. schlupffreie Untersetzungagewinde. Andererseits kann mit einem kürzeren und damit billigeren Sensorarray als bei der feststehenden Variante gearbeitet werden. Sie ist deshalb vor allem für mittlere Genauigkeiten und nicht zu schnelle Winkeländerungen vorteilhaft.

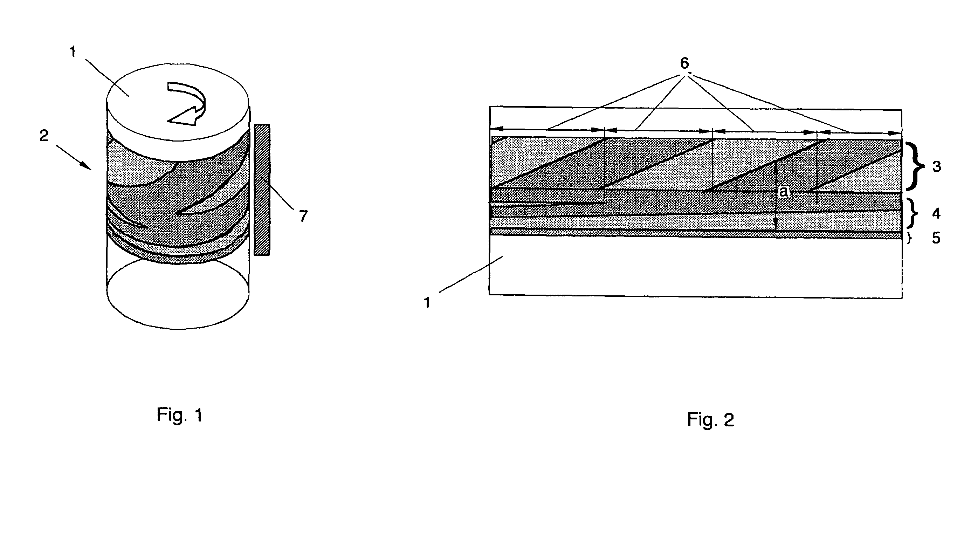

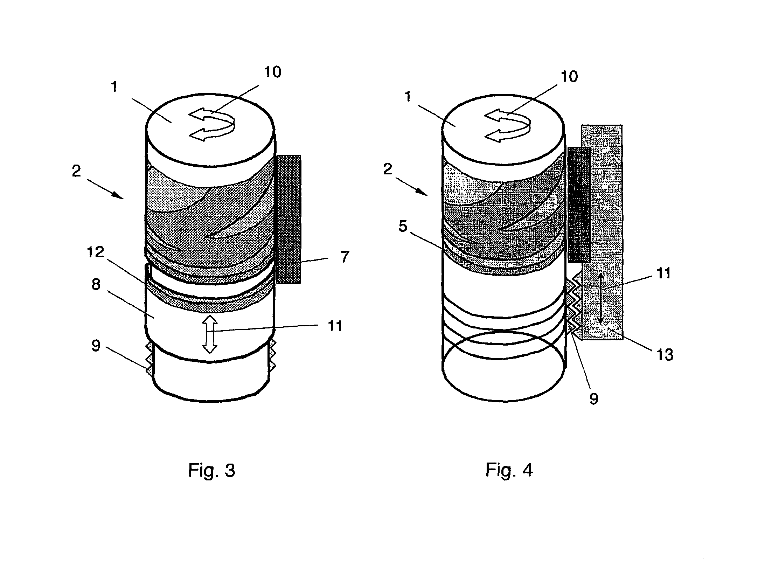

Die Erfindung wird nun anhand von in der Zeichnung schematisch dargestellten Ausführungsbeispielen näher erläutert. In dieser zeigt Fig. 1 eine Teilansicht der erfindungsgemäßen Messeinrichtung, Fig. 2 eine Zylinderabwicklung der Fig. 1, Fig. 3 eine Messeinrichtung und Fig. 4 eine Ausbildung der erfindungsgemäßen Messeinrichtung.

In Fig. 1 ist mit 1 ein Teilabschnitt einer Welle, z.B. einer Lenksäule eines Kraftfahrzeuges, dargestellt. Entlang des Umfanges der Welle 1 sind magnetische Strukturen 2 angeordnet, welche, wie in der Zylinderabwicklung gemäß Fig. 2 besser ersichtlich ist, aus mehreren in Achsrichtung der Welle aneinander anschließenden Bereichen 3, 4 und 5 bestehen. Die magnetische Struktur 3 setzt sich hierbei aus mehreren sich in Umfangsrichtung wiederholenden Strukturmustern zusammen, wobei insgesamt vier Segmente 6 entlang des Umfanges der Welle 1 angeordnet sind. Diese magnetischen Strukturen 3 weisen einfach detektierbare Feld- oder Magnetisierungsänderungen auf, welche bei einer Rotation der Welle einen entlang der Mantellinie der Welle 1 monoton wachsenden Abstand a zur Referenzstruktur 5 besitzen und somit eine eindeutige Zuordnung eines Winkelwertes zu einem Abstandswert ermöglichen. Dadurch wird eine Messung des absoluten Winkels durch ein Sensorsystem mit einem Sensorarray 7 möglich, wobei bei der in Fig. 2 dargestellten Ausbildung innerhalb eines Segmentes 6 ein eindeutiger Wert ermittelt werden kann. Um nun eine entsprechende Zuordnung zum jeweiligen Segment zu ermöglichen ist eine Referenzstruktur 4 vorgesehen, welche von einer schraubenförmigen Übergangslinie zwischen Bereichen unterschiedlicher magnetischer Eigenschaften gebildet ist. Die Schraubenlinie erstreckt sich in diesem Fall um den gesamten Umfang, sodass eine eindeutige Zuordnung zum entsprechenden Segment möglich ist. Aufgrund der geringeren Anforderungen an die Winkelauflösung kann der Bereich 4 mit geringerer axialer Höhe als Bereich 3 ausgebildet sein.

In Fig. 3 ist ein gesamtes Meßsystem ersichtlich, wobei neben der in Fig. 1 dargestellten magnetischen Struktur auch eine Zylinderhülse 8 ersichtlich ist, deren Innengewinde in Eingriff mit dem Außengewinde 9 der Welle 1 steht. Eine Drehung der Welle in Richtung des Pfeiles 10 bewirkt hierbei eine axiale Verschiebung der Zylinderhülse 8 in Richtung des Doppelpfeiles 11, sodass diese axiale Bewegung vom Sensorsystem 7 erfasst werden kann. Zu diesem Zweck ist auf der Zylinderhülse 8 eine magnetische Ringstruktur 12 angebracht. Die Messung der Verschiebelage der Zylinderhülse 8 gibt eine grobe Information über die Anzahl der Umdrehungen der Welle 1, sodass in Kombination mit der genauen und absoluten winkelerfassung in einem Bereich zwischen 0 und 360° also innerhalb des Bereiches einer einzigen Umdrehung auch der Gesamtumdrehungswinkel über mehrere Umdrehungen absolut gemessen werden kann. Auf die Referenzstruktur 4 kann verzichtet werden, wenn das Gesamtsystem nach Fig. 3 mit beweglicher Zylinderhülse eine Bestimmung der Umdrehungsanzahl auf 360°/n genau erlaubt, wobei n die Anzahl der Segmente zur Absolutwinkelmessung im Bereich 0 bis 360° ist. In Fig. 4 ist nun eine erfindungsgemäße Ausbildung des Messsystemes dargestellt, bei welcher das Außengewinde 9 der Welle 1 mit einem Reiter bzw. mit einem Träger 13 für das Sensorarray 7 zusammenwirkt. Dabei wird die umdrehungsabhängige Vertikalverschiebung des Sensorarrays durch Bestimmung der Lage des Referenzringes 5 relativ zu einem beliebig am Sensorarray 7 definierten Nullpunkt erfasst und über die Gewindesteigung in die entsprechende Winkelposition rückgerechnet.

## Patentansprüche

1. Meßeinrichtung zur berührungslosen Erfassung des absoluten Drehwinkels einer welle, insbesondere einer Lenksäule, bei Mehrfachumdrehungen, bei welcher an der Welle (1) oder einem mit ihr verbundenen Teil magnetische, optische oder magneto-optische Strukturen (2) angeordnet sind, wobei die welle (1) ein Gewinde (9) trägt, welches mit einem in Achsrichtung der Welle (1) verschiebbaren Reiter (8) in Eingriff steht, und wenigstens ein Sensor (7) zur Erfassung der magnetischen, optischen oder magneto-optischen Strukturen (2) sowie der Verschiebelage des Reiters (8) vorgesehen ist, **dadurch gekennzeichnet, dass** an der Welle (1) oder an dem mit ihr verbundenen Teil eine vom Sensor (7) erfassbare Referenzlinie (5) oder -bereich zur Bestimmung einer Bezugsposition angeordnet ist und dass der Reiter (13) mit dem Sensor (7) verbunden ist.

2. Meßeinrichtung nach Anspruch 1, **dadurch gekennzeichnet, dass** der Reiter als eine die welle (4) umgebende Hülse (8) ausgebildet ist, welche mit einem mit dem Gewinde der Welle (1) in Eingriff stehenden Innengewinde versehen ist.

3. Meßeinrichtung nach Anspruch 1 oder 2, **dadurch gekennzeichnet, dass** der Sensor (7) entlang einer sich in axialer Richtung der Welle (1) erstreckenden Meßlinie angeordnet ist.

4. Meßeinrichtung nach Anspruch 3, **dadurch gekennzeichnet, dass** der Sensor (7) als zur Meßlinie parallel angeordnetes Sensor-Array ausgebildet ist.

5. Meßeinrichtung nach einem der Ansprüche 1 bis 4, **dadurch gekennzeichnet, dass** die magnetischen, optischen oder magneto-optischen Strukturen (2) von schraubenlinienförmig bzw. spiralförmig angeordneten Übergangslinien (3,4) zwischen Bereichen unterschiedlicher magnetischer, optischer oder magneto-optischer Eigenschaften gebildet sind.

6. Meßeinrichtung nach einem der Ansprüche 1 bis 5, **dadurch gekennzeichnet, dass** die Referenzlinie (5) oder -bereich als ein in einer Normalebene auf die Wellenachse liegender Bezugsring ausgebildet ist.

7. Meßeinrichtung nach einem der Ansprüche 1 bis 6, **dadurch gekennzeichnet, dass** die Sensoren (7) als Hallsensoren ausgebildet sind.

8. Meßeinrichtung nach einem der Ansprüche 1 bis 7, **dadurch gekennzeichnet, daß** an der Welle (1) oder an dem mit ihr verbundenen Teil gesonderte magnetische, optische oder magneto-optische Strukturen (3) angeordnet sind, welche von sich in Umfangsrichtung wiederholenden Strukturmustern (6) gebildet sind.

## Claims

1. A measuring device for the contact-free detection of the absolute angle of rotation of an axle, in particular a steering column, at multiple revolutions, in which magnetic, optical or magneto-optical structures (2) are arranged on an axle (1) or a part connected therewith, wherein the axle (1) carries a worm (9) in engagement with a slider (8) that is capable of being displaced in the axial direction of the axle (1), and wherein at least one sensor (7) is provided for detecting the magnetic, optical or magneto-optical structures (2) as well as the displacement position of the slider (8), **characterized in that** a reference line (5) or region capable of being detected by the sensor (7) is arranged on the axle (1) or part connected therewith, for determining a reference position, and that the slider (13) is connected with the sensor (7).

2. A measuring device according to claim 1, **characterized in that** the slider is designed as a sleeve (8) surrounding the axle (4) that is provided with an internal worm engaging with the worm of the shaft (1).

3. A measuring device according to claim 1 or 2, **characterized in that** the sensor (7) is arranged along a measuring line extending in the axial direction of the axle (1).

4. A measuring device according to claim 3, **characterized in that** the sensor (7) is designed as a sensor array arranged in parallel with the measuring line.

5. A measuring device according to any one of claims 1 to 4, **characterized in that** the magnetic, optical or magneto-optical structures (2) are formed by helically or spirally arranged transition lines (3, 4) between regions of different magnetic, optical or magneto-optical properties.

6. A measuring device according to any one of claims 1 to 5, **characterized in that** the reference line (5) or region is designed as a reference ring located in a normal plane to the axis of the axle.

7. A measuring device according to any one of claims 1 to 6, **characterized in that** the sensors (7) are designed as Hall sensors.

8. A measuring device according to any one of claims 1 to 7, **characterized in that** separate magnetic, optical or magneto-optical structures (3) formed by circumferentially repeated structural patterns (6) are arranged on the axle (1) or part connected therewith.

## Revendications

1. Dispositif de mesure pour relever sans contact l'angle de rotation absolu d'un arbre, en particulier d'une colonne de direction, dans le cas de rotations multiples, dans lequel des structures (2) magnétiques, optiques ou magnéto-optiques sont disposées sur l'arbre ou sur un élément relié à celui-ci, l'arbre (1) portant un filetage (9) qui est en prise avec un curseur (8) pouvant coulisser dans la direction de l'axe de l'arbre (1), et au moins un capteur (7) étant prévu pour détecter les structures (2) magnétiques, optiques ou magnéto-optiques ainsi que la position de coulissement du curseur (8), **caractérisé en ce que** sur l'arbre (1) ou sur l'élément relié à celui-ci est disposée une ligne de référence (5) ou une zone de référence qui peut être détectée par le capteur (7) pour déterminer une position de référence, et **en ce que** le curseur (13) est relié au capteur (7).

2. Dispositif de mesure selon la revendication 1, **caractérisé en ce que** le curseur est réalisé sous la forme d'une douille (8) entourant l'arbre (4), laquelle est pourvue d'un taraudage en prise avec le filetage de l'arbre (1).

3. Dispositif de mesure selon la revendication 1 ou 2, **caractérisé en ce que** le capteur (7) est disposé le long d'une ligne de mesure s'étendant dans la direction axiale de l'arbre (1).

4. Dispositif de mesure selon la revendication 3, **caractérisé en ce que** le capteur (7) est réalisé sous la forme d'un ensemble de capteurs disposés parallèlement à la ligne de mesure.

5. Dispositif de mesure selon l'une des revendications 1 à 4, **caractérisé en ce que** les structures (2) magnétiques, optiques ou magnéto-optiques sont formées par des lignes de transition (3, 4), disposées en hélice ou en spirale, entre des zones aux propriétés magnétiques, optiques ou magnéto-optiques différentes.

6. Dispositif de mesure selon l'une des revendications 1 à 5, **caractérisé en ce que** la ligne de référence (5) ou la zone de référence est réalisée sous la forme d'un anneau de référence se situant dans un plan normal à l'axe de l'arbre.

7. Dispositif de mesure selon l'une des revendications 1 à 6, **caractérisé en ce que** les capteurs (7) sont réalisés sous la forme de capteurs à effet Hall.

8. Dispositif de mesure selon l'une des revendications 1 à 7, **caractérisé en ce que** sur l'arbre (1) ou sur l'élément relié à celui-ci, sont disposées des structures (3) magnétiques, optiques ou magnéto-optiques séparées, qui sont formées par des motifs de structure (6) se répétant dans la direction périphérique.
